# EUROPEAN PATENT SPECIFICATION

(11) **EP 2 933 126 B1**
(45) Date of publication and mention of the grant of the patent: **22.02.2017**
(21) Application number: 14164583.8
(22) Date of filing: 14.04.2014
(51) Int. Cl.: B60J 5/04, B60J 5/06

(54) **Sliding door for vehicles**
Schiebetür für Fahrzeuge
Porte coulissante pour véhicules

(43) Date of publication of application: 21.10.2015
(73) Proprietor: Ford Otomotiv Sanayi Anonim Sirketi, 34885 Sancaktepe/Istanbul (TR)
(72) Inventor: Sayan, Övgü, Kurtköy-Pendik/Istanbul (TR); Ölmez, Halil, Gölcük/Kocaeli (TR); Topçu, Levent, Degirmendere Gölcük/ Kocaeli (TR); Gündogdu, Özgür, Degirmendere Gölcük/Kocaeli (TR)
(74) Representative: Illing, Rolf

(56) References cited:
- KR-A- 20030 080 834
- US-A1- 2011 094 061
- US-B1- 6 781 058

## Description

The present invention relates to a sliding door for vehicles, particularly for motor vehicles.

Such a door is known for example from KR 20030080834 A.

Certain motor vehicles such as a van, minivan, or a crossover vehicle, for example, are equipped with a sliding door which serves to open and close an opening, e.g. an entrance for passengers, in the side wall of the vehicle body. Typically, such sliding doors comprise upper and lower guide mechanisms attached to the upper and lower parts, respectively, of the entrance and a center guide mechanism attached to the vertical middle part of an outer wall at the rear portion of the vehicle body. Usually, these guide mechanisms include upper, center, and lower rails attached to the vehicle body and rollers on the sliding door. Each roller engages its corresponding rail so as to be rollable thereon. The rollers are typically supported by respective roller brackets which constitute a roller assembly. The roller brackets are in turn attached to the sliding door.

It is an object of the present invention to provide a sliding door for vehicles, particularly for motor vehicles, which comprises an adjustable center roller assembly being independently adjustable in two different directions.

This object is achieved by a sliding door having the features of claim 1. Further, particularly advantageous embodiments of the invention are disclosed in the dependent claims.

It should be noted that the individual features listed in the description below can be combined in any technically meaningful way with each other and show further embodiments of the invention. The description of the invention is additionally characterized and specified particularly in connection with the figures.

According to the present invention a sliding door for vehicles, particularly for motor vehicles, comprises an inner door panel onto which a center roller assembly is mounted. The center roller assembly includes at least a roller being supported by a roller bracket which in turn is connected to an attachment bracket via a plurality of connecting means, for example, bolts. The attachment bracket and the roller bracket are disposed opposite one another such that the inner door panel is interposed between the roller bracket and the attachment bracket. The roller bracket comprises long holes formed therein. The inner door panel comprises corresponding long holes formed therein. In order to connect the roller bracket to the attachment bracket the connecting means each pass through the respective long holes formed in the roller bracket and the corresponding long holes formed in the inner door panel. According to the present invention the longitudinal axes of the long holes formed in the roller bracket are substantially perpendicular to the longitudinal axes of the long holes formed in the inner door panel. The long holes formed in the roller bracket allow for an adjustment of its position in one direction whereas the long holes formed in the inner door panel allow for an adjustment of the position of the roller bracket in another direction which is perpendicular to the adjustment direction provided by the long holes formed in the roller bracket. Thus, an adjustment of the position of the roller bracket in two different (perpendicular) directions is possible independent of each other. This allows a more precise adjustment of the center roller assembly on the slide door of the vehicle.

According to an advantageous embodiment of the present invention a reinforcement bracket is interposed between the inner door panel and the attachment bracket. Similar to the inner door panel of the sliding door the reinforcement bracket comprises also a plurality of long holes formed therein. Furthermore, the longitudinal axes of these long holes correspond to the longitudinal axes of the long holes formed in the inner door panel. The reinforcement bracket serves as a strengthening of the area of the inner door panel where the center roller assembly is mounted. Thus, the whole inner door panel can be constructed of a thinner panel sheet which helps in reducing the overall weight of the vehicle.

A further advantageous embodiment of the present invention provides that the inner door panel comprises at least one additional long hole which is not covered by the roller bracket, i.e. the additional long hole formed in the inner door panel does not correspond to any of the afore-mentioned long holes formed in the roller bracket and is freely accessible outside the footprint of the roller bracket on the inner door panel.

Thus, the roller bracket cannot be fixed to the inner door panel via the additional long hole by passing an additional connecting means there through. Instead, it is the attachment bracket which can be fixed to the inner door panel via the additional connecting means passing through the additional long hole and being fastened to the attachment bracket. In this way, the attachment bracket can be fixed to the inner door panel while the roller bracket is still movable relative to the inner door panel in the direction defined by the long holes formed in the roller bracket. Thus, while the position of the center roller assembly relative to the inner door panel is fixed in one direction, the position of the center roller assembly is still adjustable in the other (perpendicular) direction allowing a more precise fixing of the position of the center roller assembly relative to the inner door panel in both directions as one directional position can be fixed after the other.

Another advantageous embodiment of the present invention provides that a spacer is interposed between at least one of the long holes formed in the roller bracket and the attachment bracket. The spacer is fixed to the attachment bracket and has a thickness such that, when the long hole having the spacer associated therewith is fixed to the attachment bracket via one connecting means, the roller bracket is not fixed to the inner door panel. In other words, the distance between the roller bracket and the attachment bracket provided by the spacer is always equal to or slightly greater than the thickness of any interposed material between the roller bracket and the attachment bracket such as the inner door panel or the inner door panel plus the reinforcement bracket. In this way, the roller bracket can be fixed to the attachment bracket while both components are still movable relative to the inner door panel in the direction defined by the long holes formed in the inner door panel. Thus, while the position of the center roller assembly relative to the inner door panel is fixed in one direction, the position of the center roller assembly is still adjustable in the other (perpendicular) direction allowing a more precise fixing of the position of the center roller assembly relative to the inner door panel in both directions as one directional position can be fixed after the other.

According to yet another advantageous embodiment of the present invention the connecting means are bolts. The bolts are each accommodated in a weld nut attached to the attachment bracket.

Further features and advantages of the present invention will become apparent from the following description of a non-limiting embodiment of the invention which will be explained below with reference to the drawing. In this drawing:
- FIG. 1: is a perspective view of an exemplary embodiment of a sliding door according to the present invention;
- FIG. 2: is an enlarged perspective view of an exemplary centre roller bracket;
- FIG. 3: is a partial front side view of an inner door panel showing a footprint area of the roller bracket of FIG. 2;
- FIG. 4: is a backside view of the inner door panel of FIG. 3;
- FIG. 5: is an exploded view of the backside of the inner door panel of FIG. 4;
- FIG. 6: is a perspective view of an installed center roller assembly on the front side of an inner door panel; and
- FIG. 7: is a perspective view of the installed center roller assembly on the backside of the inner door panel of FIG. 6.

In the different figures equivalent parts with respect to their function are always provided with the same reference numerals so that they are usually described only once.

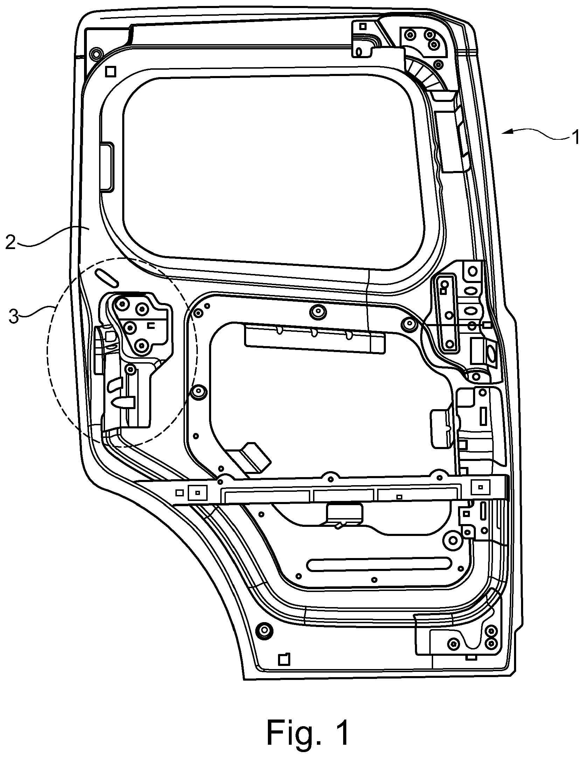

FIG. 1 is a perspective view of an exemplary embodiment of a sliding door 1 for vehicles, in particular motor vehicles, according to the present invention. A rear portion of the sliding door 1 where a center roller assembly (not shown) is usually mounted on an inner door panel 2 of the sliding door 1 is shown encircled at 3.

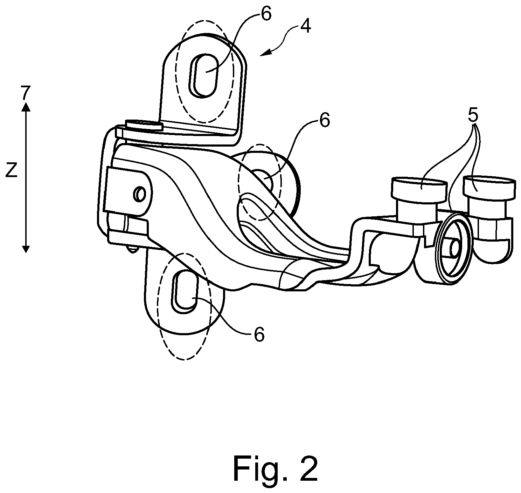

FIG. 2 is an enlarged perspective view of an exemplary roller bracket 4 of a center roller assembly which can be mounted to the rear portion 3 of the sliding door 1 of FIG. 1 as will be described in further detail hereinafter. As shown in FIG. 2, three rollers 5 are supported by the center roller bracket 4. The roller bracket 4 comprises three long holes 6 each having a longitudinal axis in a Z-direction indicated by arrow 7. The long holes 6 enable the roller bracket 4 to be moved in the Z-direction by approximately +/- 3 mm.

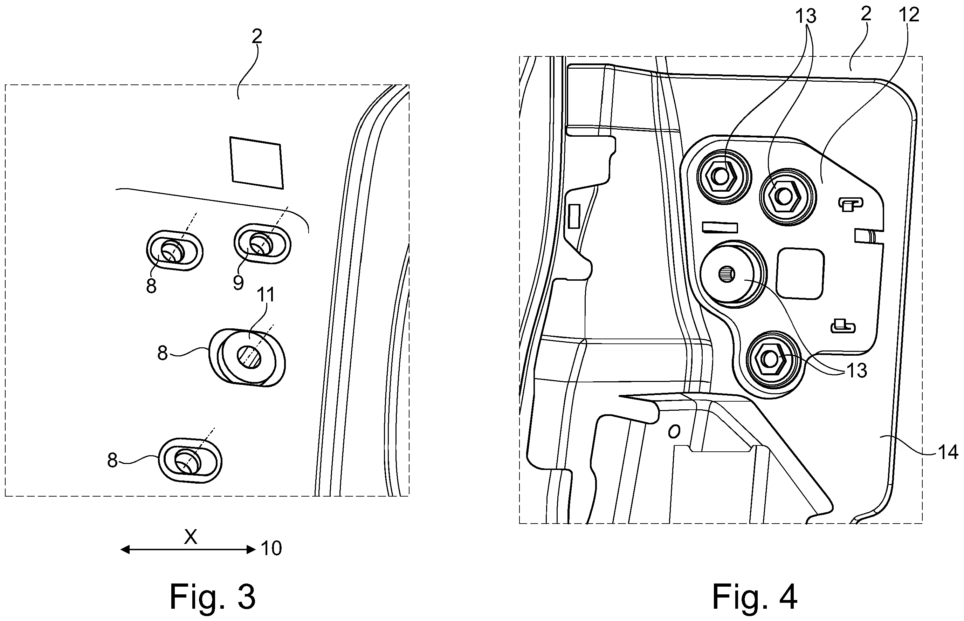

FIG. 3 is a partial front side view of the inner door panel 2 showing a footprint area of the roller bracket 4 of FIG. 2. As shown in FIG. 3, the inner door panel 2 comprises three long holes 8 corresponding to the locations of the long holes 6 of the roller bracket 4 shown in FIG. 2 and one additional long hole 9, wherein each of the long holes 8 and 9 have a longitudinal axis in an X-direction indicated by arrow 10. The additional long hole 9 is not covered by the footprint of the roller bracket 4 shown in FIG. 2, i.e. the additional long hole 9 formed in the inner door panel 2 does not correspond to any of the long holes 8 formed in the roller bracket 4. The longitudinal axes of the long holes 6 formed in the roller bracket 4 as shown in FIG. 2 are perpendicular to the longitudinal axes of the long holes 8 and 9 formed in the inner door panel 2 shown in FIG. 3. Thus, the X-direction and the Z-direction indicated in the FIGS. herein are perpendicular directions. Furthermore, in FIG. 3 a spacer 11 is disposed in one of the three long holes 8 formed in the inner door panel 2 which correspond to the long holes 6 of the roller bracket 4 shown in FIG. 2. The function of the spacer 11 will be described further below.

FIG. 4 is a backside view of the inner door panel 2 of FIG. 3. As shown, on the backside of the inner door panel 2 there is disposed an attachment bracket 12 to which the roller bracket 4 shown in FIG. 2 can be connected via a plurality of connecting means (not shown), e.g. bolts. The connecting means each pass through the long holes 6 formed in the roller bracket 4 shown in FIG. 2 and the corresponding long holes 8 formed in the inner door panel 2 shown in FIG. 3. The long holes 8 and 9 formed in the inner door panel 2 enable the attachment bracket 12 to be moved in the X-direction by approximately +/- 3 mm. In order to connect the connecting means to the attachment bracket 12 the attachment bracket 12 shown in FIG. 4 comprises respective weld nuts 13 attached to the attachment bracket 12 by welding, for example. Each connecting means or bolt is accommodated in one weld nut 13.

Further, as can be seen in FIG. 4, a reinforcement bracket 14 is interposed between the inner door panel 2 and the attachment bracket 12 for basically strengthening the footprint area of the roller bracket 4 shown in FIG. 2 on the inner door panel 2. Moreover, as the roller bracket 2 is mounted on the front side of the inner door panel 2 shown in FIG. 3 and the attachment bracket 12 is mounted on the backside of the inner door panel 2 shown in FIG. 4 the inner door panel 2 is interposed between the roller bracket 2 and the attachment bracket 12.

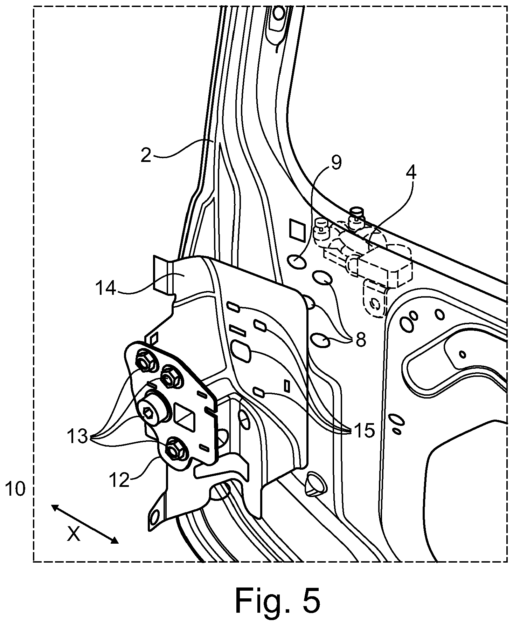

FIG. 5 is an exploded view of the backside of the inner door panel 2 of FIG. 4. From this view it is apparent, that the reinforcement bracket 14 also comprises a plurality of long holes 15 formed therein. The longitudinal axes of the long holes 15 all correspond to the longitudinal axes of the long holes 8 and 9 formed in the inner door panel 2 and extend in the same direction, namely the X-direction, denoted by arrow 10.

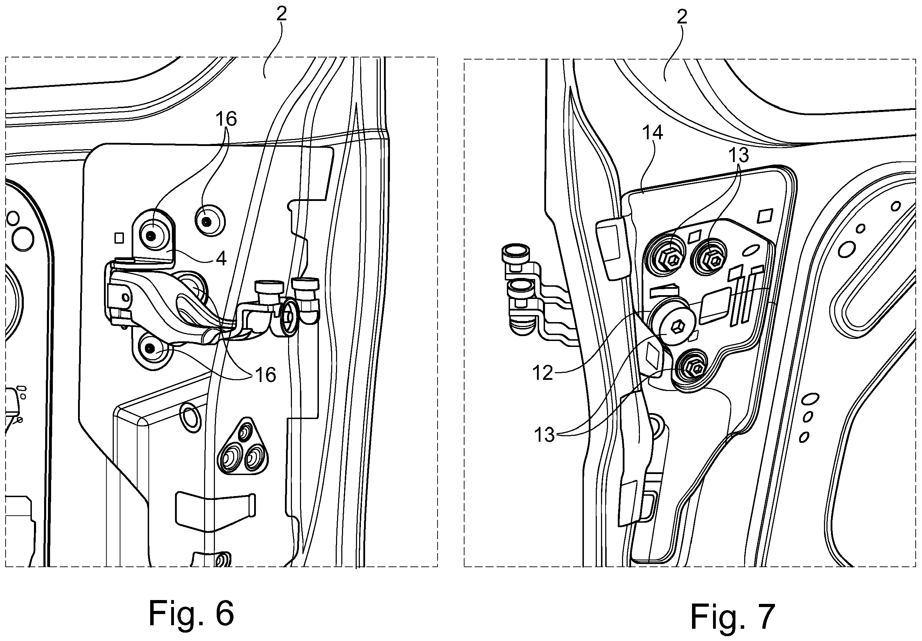

FIG. 6 is a perspective view of an installed center roller assembly on the front side of an inner door panel 2 and FIG. 7 is a perspective view of the installed center roller assembly on the backside of the inner door panel of FIG. 6. As shown, the center roller assembly comprises the roller bracket 4 mounted on the front side of the inner door panel 2 and the attachment bracket 12 mounted on the backside of the inner door panel 2. The roller bracket 4 is connected to the attachment bracket 12 via a plurality of connecting means 16 shown in the form of bolts which are screwed into respective weld nuts 13 attached to the attachment bracket 12. Each connecting means 16 passes through a long hole 6 (covered by a bolt head of the connecting means 16 in FIG. 6) formed in the roller bracket 4 and a corresponding long hole 8 formed in the inner door panel 2 and a corresponding long hole 15 formed in the reinforcement bracket 14. As shown in FIG. 6, one additional connecting means 16 passes through the additional long hole 9 (covered by a bolt head of the connecting means 16 in FIG. 6) formed in the inner door panel 2.

As mentioned above with reference to FIG. 3, the spacer 11 is interposed between one of the long holes 6 formed in the roller bracket 4 and the attachment bracket 12. The spacer 11 is fixed to the attachment bracket 12 and has a thickness such that, when the long hole 6 having the spacer 11 associated therewith is fixed to the attachment bracket 12 via the connecting means 16, the roller bracket 4 is not fixed to the inner door panel 2. In the exemplary embodiment of the sliding door 1 shown in the FIGS., the distance between the roller bracket 4 and the attachment bracket 12 provided by the spacer 11 is equal to or slightly greater than the thickness of the inner door panel 2 and the reinforcement bracket 14 together which are interposed between the roller bracket 4 and the attachment bracket 12. In this way, the roller bracket 4 can be fixed to the attachment bracket 12 while both components are still movable relative to the inner door panel 2 and the reinforcement bracket 14 in the X-direction defined by the long holes 8, 9 and 15 formed in the inner door panel 2 and the reinforcement bracket 14, respectively. As is apparent from FIG. 3, the spacer 11 attached to the attachment bracket 12 is guided inside the associated long hole 8 by the inner walls thereof. Thus, while the position of the roller bracket 4 relative to the inner door panel 2 is fixed in the Z-direction, the position of the roller bracket 4 is still adjustable in the X-direction allowing a more precise fixing of the position of the center roller assembly relative to the inner door panel 2 in both the X- and Z-direction as one directional position can be fixed after the other.

Furthermore, as mentioned above with reference to FIG. 3, an additional long hole 9 is provided in the inner door panel 2 as well as in the reinforcement bracket 14. Via a connecting means 16 passing through the additional long hole 9 and being fastened to the attachment bracket 12 the attachment bracket 12 can be fixed to the inner door panel 2 while the roller bracket 4 is still movable relative to the inner door panel 2 in the Z-direction defined by the long holes 6 formed in the roller bracket 4 if the connecting means 16 passing through the long holes 6 of the roller bracket 4 are not yet fastened. Thus, while the position of the center roller assembly relative to the inner door panel 2 is fixed in the X-direction, the position of the center roller assembly is still adjustable in the Z-direction allowing a more precise fixing of the position of the center roller assembly relative to the inner door panel 2 in both the X- and Z-direction as one directional position can be fixed after the other.

The above described sliding door for a vehicle according to the present invention is not limited to the embodiment disclosed herein, but also encompasses other embodiments having the same effect.

In a preferred embodiment the sliding door according to the present invention is used in a motor vehicle to open and close an opening, e.g. an entrance for passengers, in the side wall of the vehicle body.

### List of reference numerals:

- 1: Sliding door
- 2: Inner door panel
- 3: Rear portion of 1
- 4: Center roller bracket
- 5: Roller
- 6: Long holes of 4
- 7: Z-direction
- 8: Long holes of 2
- 9: Additional long hole of 2
- 10: X-direction
- 11: Spacer
- 12: Attachment bracket
- 13: Weld nut
- 14: Reinforcement bracket
- 15: Long holes of 14
- 16: Connecting means

## Claims

1. A sliding door for vehicles comprising an inner door panel (2) onto which a center roller assembly is mounted which includes at least a roller (5) being supported by a roller bracket (4) which is connected to an attachment bracket (12) via a plurality of connecting means (16), said inner door panel (2) being interposed between said roller bracket (4) and said attachment bracket (12), wherein said connecting means (16) each pass through respective long holes (6) formed in said roller bracket (4) and corresponding long holes (8) formed in said inner door panel (2), wherein the longitudinal axes of said long holes (6) formed in said roller bracket (4) are perpendicular to the longitudinal axes of said long holes (8) formed in said inner door panel (2).

2. The sliding door according to claim 1, wherein a reinforcement bracket (14) is interposed between said inner door panel (2) and said attachment bracket (12), said reinforcement bracket (14) comprising a plurality of long holes (15) formed therein the longitudinal axes thereof corresponding to the longitudinal axes of said long holes (8, 9) formed in the inner door panel (2).

3. The sliding door according to claim 1 or 2, wherein said inner door panel (2) comprises at least one additional long hole (9) not covered by said roller bracket (4), said attachment bracket (12) being fixable to said inner door panel (2) via an additional connecting means (16) passing through said additional long hole (9).

4. The sliding door according to any of the preceding claims, wherein a spacer (11) is interposed between at least one of said long holes (6) formed in said roller bracket (4) and said attachment bracket (12), the spacer (11) being fixed to said attachment bracket (12) and having a thickness such that, when said long hole (6) having said spacer (11) associated therewith is fixed to said attachment bracket (12) via said connecting means (16), said roller bracket (4) is not fixed to said inner door panel (2).

5. The sliding door according to any of the preceding claims, wherein said connecting means (16) are bolts each being accommodated in a weld nut (13) attached to said attachment bracket (12).

## Patentansprüche

1. Schiebetür für Fahrzeuge, die ein Innentürfeld (2) umfasst, auf dem eine Zentralrollenbaugruppe montiert ist, die mindestens eine Rolle (5) umfasst, die durch einen Rollenbügel (4) gestützt wird, der mit einem Befestigungsbügel (12) über eine Vielzahl von Verbindungsmitteln (16) verbunden ist, wobei das Innentürfeld (2) zwischen dem Rollenbügel (4) und dem Befestigungsbügel (12) angeordnet ist, wobei die Verbindungsmittel (16) jeweils durch jeweilige Langlöcher (6), die in dem Rollenbügel (4) ausgebildet sind, und entsprechende Langlöcher (8), die in dem Innentürfeld (2) ausgebildet sind, verlaufen, wobei die Längsachsen der Langlöcher (6), die in dem Rollenbügel (4) ausgebildet sind, senkrecht zu den Längsachsen der Langlöcher (8) verlaufen, die im Innentürfeld (2) ausgebildet sind.

2. Schiebetür nach Anspruch 1, wobei ein Verstärkungsbügel (14) zwischen dem Innentürfeld (2) und dem Befestigungsbügel (12) eingefügt ist, wobei der Verstärkungsbügel (14) eine Vielzahl von darin gebildeten Langlöchern (15) umfasst, wobei die Längsachsen davon den Längsachsen der Langlöcher (8, 9) entsprechen, die im Innentürfeld (2) ausgebildet sind.

3. Schiebetür nach Anspruch 1 oder 2, wobei das Innentürfeld (2) mindestens ein zusätzliches Langloch (9) umfasst, das nicht durch den Rollenbügel (4) abgedeckt ist, wobei der Befestigungsbügel (12) an dem Innentürfeld (2) über ein zusätzliches Verbindungsmittel (16) befestigt werden kann, das durch das zusätzliche Langloch (9) verläuft.

4. Schiebetür nach einem der vorstehenden Ansprüche, wobei ein Abstandshalter (11) zwischen mindestens einem der Langlöcher (6), die in dem Rollenbügel (4) und dem Befestigungsbügel (12) ausgebildet sind, eingefügt ist, wobei der Abstandshalter (11) an dem Befestigungsbügel (12) angebracht ist und eine derartige Dicke aufweist, dass, wenn das Langloch (6) mit dem damit verbundenen Abstandshalter (11) an dem Befestigungsbügel (12) über das Verbindungsmittel (16) angebracht wird, der Rollenbügel (4) nicht an dem Innentürfeld (2) angebracht wird.

5. Schiebetür nach einem der vorstehenden Ansprüche, wobei das Verbindungsmittel (16) aus Bolzen besteht, die jeweils in einer Schweißmutter (13), die an dem Befestigungsbügel (12) angebracht ist, enthalten sind.

## Revendications

1. Porte coulissante pour véhicules, comprenant un panneau de porte intérieur (2) sur lequel est monté un ensemble de rouleau central qui comprend au moins un rouleau (5) supporté par un support de rouleau (4) connecté à une console de fixation (12) par l'intermédiaire d'une pluralité de moyens de connexion (16), ledit panneau de porte intérieur (2) étant intercalé entre ledit support de rouleau (4) et ladite console de fixation (12), dans laquelle lesdits moyens de connexion (16) passent chacun à travers de longs trous respectifs (6) formés dans ledit support de rouleau (4) et de longs trous correspondants (6) formés dans ledit panneau de porte intérieur (2), dans laquelle les axes longitudinaux desdits longs trous (6) formés dans ledit support de rouleau (4) sont perpendiculaires aux axes longitudinaux desdits longs trous (8) formés dans ledit panneau de porte intérieur (2).

2. Porte coulissante selon la revendication 1, dans laquelle une console de renforcement (14) est intercalée entre ledit panneau de porte intérieur (2) et ladite console de fixation (12), ladite console de renforcement (14) comportant une pluralité de longs trous (15) formés dans celle-ci et dont les axes longitudinaux correspondent aux axes longitudinaux desdits longs trous (8, 9) formés dans le panneau de porte intérieur (2).

3. Porte coulissante selon la revendication 1 ou 2, dans laquelle ledit panneau de porte intérieur (2) comporte au moins un long trou supplémentaire (9) qui n'est pas couvert par ledit support de rouleau (4), ladite console de fixation (12) pouvant être fixée audit panneau de porte intérieur (2) par l'intermédiaire de moyens de connexion supplémentaires (16) qui passent à travers ledit long trou supplémentaire (9)

4. Porte coulissante selon l'une quelconque des revendications précédentes, dans laquelle un espaceur (11) est intercalé entre au moins un desdits longs trous (6) formés dans ledit support de rouleau (4) et ladite console de fixation (12), l'espaceur (11) étant fixé à ladite console de fixation (12) et présentant une épaisseur telle que, lorsque ledit long trou (6) muni dudit espaceur (11) qui lui est associé est fixé à ladite console de fixation (12) par l'intermédiaire desdits moyens de connexion (16), ledit support de rouleau (4) ne soit pas fixé audit panneau de porte intérieur (2).

5. Porte coulissante selon l'une quelconque des revendications précédentes, dans laquelle lesdits moyens de connexion (16) sont des boulons qui sont reçus chacun dans un écrou à souder (13) attaché à ladite console de fixation (12).
